# EUROPEAN PATENT APPLICATION

(11) **EP 4 216 077 A1**
(43) Date of publication of application: **26.07.2023**
(21) Application number: 22748916.8
(22) Date of filing: 24.01.2022
(51) Int. Cl.: G06F 16/27, G06F 16/23, G06Q 40/04

(54) **BLOCKCHAIN NETWORK-BASED METHOD AND APPARATUS FOR DATA PROCESSING, AND COMPUTER DEVICE**

(30) Priority: 07.02.2021 CN 202110175960
(71) Applicant: Tencent Technology (Shenzhen) Company Limited, Shenzhen, Guangdong, 518057 (CN)
(72) Inventor: WEN, Weili, Shenzhen, Guangdong 518057 (CN)
(74) Representative: Eisenführ Speiser
(86) International application number: PCT/CN2022/073412
(87) International publication number: WO 2022/166637

(57) **Abstract**

A blockchain network-based method and apparatus for data processing, and a computer device. The method comprises: a management device acquires a transaction request carrying transaction data and reference signature data, determines a target endorsement device, and transmits the transaction request to the target endorsement device; when the transaction data and the reference signature data are successfully verified, the target endorsement device determines a matching node device, acquires a signature key of the matching node device, determines, on the basis of the transaction data, data to be signed, endorses and signs said data on the basis of the signature key of the matching node device to produce endorsed and signed data, and transmits the endorsed and signed data to the management device; and the management device generates a transaction block on the basis of the endorsed and signed data and of the transaction data. The method effectively saves the time required for reaching a consensus, thus increasing the transaction performance of an entire network.

## Description

### RELATED APPLICATION

This application claims priority to Chinese Patent Application No. 2021101759601, entitled "METHOD AND APPARATUS FOR DATA PROCESSING BASED ON BLOCKCHAIN NETWORK, AND COMPUTER DEVICE", and filed with the China National Intellectual Property Agency on February 07, 2021, which is incorporated herein by reference in its entirety.

### FIELD OF THE TECHNOLOGY

The present disclosure relates to the technical field of blockchains, in particular, to technology of data processing in a blockchain network.

### BACKGROUND OF THE DISCLOSURE

Advent of the science and technology era and development of the mobile Internet accelerates revolution in networks. Various services, such as fusing information within one field or among multiple fields and providing all-around informationization solutions for customers, face new challenges on, for example, improving a systematic structure and transferring a supporting base. Hence, as an embodiment of a distributed ledger, blockchain technology is becoming a preferable manner for storing data, especially transaction data, in various fields due to its natural advantage on data storage and data management.

Performances of a transaction implemented based on a blockchain network depends deeply on a process of the transaction. Generally, each transaction in the blockchain network can be executed by each node or uploaded onto a blockchain only when being verified through consensus. In order to ensure a result of the consensus accurate, most nodes in the blockchain network are usually configured to be consensus nodes, and they are required to participate in each round of the consensus. As a result, the consensus consumes a lot of time, which render the transactions inefficient. Hence, it needs to be addressed how to improve transaction performances of a blockchain network.

### SUMMARY

A method and an apparatus for data processing based on a blockchain network, and a computer device, are provided according to embodiments of the present disclosure. Time consumption of consensus is effectively reduced, which improves transaction performances of the entire blockchain network.

In one aspect, a method for data processing based on a blockchain network is provided according to an embodiment of the present disclosure. The blockchain network is comprised in a data processing network and comprises multiple node devices. The data processing network further comprises a management network, and the management network comprises a management device and one or more endorsement devices. The method is applicable to one of the endorsement devices, and comprises: acquiring a transaction request, where the transaction request carries transaction data and a referential signature corresponding to the transaction data; performing verification on the transaction data and the referential signature; determining a matching node device from one or more target node devices and acquiring a signature key of the matching node device, in a case that the transaction data and the referential signature passes the verification, where the one or more target node devices are determined from the multiple node devices according to an endorsement policy; determining to-be-signed data according to the transaction data and signing the to-be-signed data using the signature key to obtain endorsement signature; and transmitting the endorsement signature to the management device to enable the management device to generate a transaction block according to the endorsement signature and the transaction data.

In one aspect, another method for data processing based on a blockchain network is provided according to an embodiment of the present disclosure. The blockchain network is comprised in a data processing network and comprises multiple node devices. The data processing network further comprises a management network, and the management network comprises a management device and one or more endorsement devices. The method is applicable to the management device, and comprises: acquiring a transaction request, where the transaction request carries transaction data and a referential signature corresponding to the transaction data; determining a target endorsement device from the one or more endorsement devices; transmitting the transaction request to the target endorsement device to enable the target endorsement device to obtain endorsement signature according to the transaction data and the referential signature; receiving the endorsement signature transmitted by the target endorsement device; and generating a transaction block according to the endorsement signature and the transaction data.

In one aspect, an apparatus for data processing based on a blockchain network is provided according to an embodiment of the present disclosure. The blockchain network is comprised in a data processing network and comprises multiple node devices. The data processing network further comprises a management network, and the management network comprises a management device and one or more endorsement devices. The apparatus is disposed in one of the endorsement devices, and comprises: an acquiring unit, configured to acquire a transaction request, where the transaction request carries transaction data and a referential signature corresponding to the transaction data; a processing unit, configured to perform verification on the transaction data and the referential signature, further configured to determine a matching node device from one or more target node devices and acquire a signature key of the matching node device, in a case that the transaction data and the referential signature passes the verification, where the one or more target node devices are determined from the multiple node devices according to an endorsement policy, and further configured to determine to-be-signed data according to the transaction data and sign the to-be-signed data using the signature key to obtain endorsement signature; and a transcribing unit, configured to transmit the endorsement signature to the management device to enable the management device to generate a transaction block according to the endorsement signature and the transaction data.

In one aspect, an apparatus for data processing based on a blockchain network is provided according to an embodiment of the present disclosure. The blockchain network is comprised in a data processing network and comprises multiple node devices. The data processing network further comprises a management network, and the management network comprises a management device and one or more endorsement devices. The apparatus is disposed in the management device, and comprises: an acquiring unit, configured to receive a transaction request, where the transaction request carries transaction data and a referential signature corresponding to the transaction data; a processing unit, configured to determine a target endorsement device from the one or more endorsement devices; and a transcribing unit, configured to transmit the transaction request to the target endorsement device to enable the target endorsement device to obtain endorsement signature according to the transaction data and the referential signature, and further configured to receive the endorsement signature transmitted by the target endorsement device; where the processing unit is further configured to generate a transaction block according to the endorsement signature and the transaction data.

In one aspect, a computer device is provided according to an embodiment of the present disclosure. The computer device comprises a processor, a communication interface, and a memory, which are connected to each other. The memory stores an executable program code, and the processor is configured to invoke the executable program code to perform the method according to embodiments of the present disclosure.

Correspondingly, a computer-readable storage medium is provided according to an embodiment of the present disclosure. The computer-readable storage medium stores a computer program, and the computer program when executed by a computer configured the computer to perform the method according to embodiments of the present disclosure.

Correspondingly, a computer program product or a computer program is provided according to an embodiment of the present disclosure. The computer program product or the computer program comprises computer instructions, and the computer instructions are stored in a computer-readable storage medium. A processor of a computer device reads the computer instructions from the computer-readable storage medium and executes the computer instructions to configured computer device to perform the foregoing method.

According to embodiments of the present disclosure, the management network is provided in the data processing network. The endorsement device in the management network verifies data in the transaction request, and in a case that the data passed the verification, endorses the to-be-signed data, which is determined based on the transaction data, according to the endorsement policy to obtain the endorsement signature. Thereby, the data verification and the endorsement, i.e., the consensus, can be intensively and efficiently implemented in the management network. It is not necessary that the node devices in the blockchain network participate in the consensus. Therefore, time consumption of the consensus is effectively reduced, and transactions can be processed with higher efficiency, which improves transaction performances of the entire blockchain network.

### BRIEF DESCRIPTION OF THE DRAWINGS

Figure 1a is a schematic architectural diagram of a data processing network according to an embodiment of the present disclosure.
Figure 1b is a schematic architectural diagram of a data processing network according to another embodiment of the present disclosure.
Figure 2 is a schematic flowchart of a method for data processing according to an embodiment of the present disclosure.
Figure 3 shows correspondence between endorsement devices and node devices according to an embodiment of the present disclosure.
Figure 4 shows a process of a transaction in a Fabric blockchain.
Figure 5 shows architecture of cross-domain governance among blockchain nodes according to an embodiment of the present disclosure.
Figure 6 shows architecture of cross-domain governance among blockchain nodes according to another embodiment of the present disclosure.
Figure 7 is a schematic structural diagram of an apparatus for data processing according to an embodiment of the present disclosure.
Figure 8 is a schematic structural diagram of a computer device according to an embodiment of the present disclosure.

### DESCRIPTION OF EMBODIMENTS

Hereinafter technical solutions in embodiments of the present disclosure are described clearly and completely in conjunction with the drawings in embodiments of the present closure. Apparently, the described embodiments are only some rather than all of the embodiments of the present disclosure. Any other embodiments obtained based on the embodiments of the present disclosure by those skilled in the art without any creative effort fall within the scope of protection of the present disclosure.

Hereinafter some terms involved in embodiments of the present disclosure are introduced for better understanding of the embodiments.

A blockchain is a decentralized distributed ledger database, and is an intelligent peer-to-peer network that identifies, propagates, and records information via a distributed database. Hence, the block chain is also called as the Internet of value. The blockchain ensures accuracy of data transmission and data query through technology such as a consensus mechanism and cryptology, and has characteristics of tamperproof and traceability. The blockchain is a new mode which applies computer technology such as distributed data storage, point-to-point transmission, a consensus mechanism, and an encryption algorithm. The blockchain is essentially a decentralized database, and is a series of data blocks associated via a cryptographic means. Each data block includes information on a batch of network transactions, which is configured to check validity of the information (for anti-counterfeiting) and generating a next block. The blockchain may include a blockchain underlying platform, a platform-product service layer, and an application service layer.

Generally, the blockchain may comprise a blockchain underlying platform, a platform-product service layer, and an application service layer. The blockchain underlying platform may include processing modules for, for example, user management, basic service, intelligent contracts, and operation supervision. The user management module is responsible for managing identity information of all participants of a blockchain, including maintaining generation of public keys and private keys (account management), managing the keys, and maintaining a relationship between user's real identities and blockchain addresses (authority management), or the like. In case of being authorized, the user management module supervises and audits some real-identity transactions, and provides rule configurations on risk control (risk control audit). The basic service module is deployed on all blockchain node devices to check validity of a service request, and records a valid request onto storage after successful consensus. In case of a new service request, the basic service module first performs parsing and authentication that are adapted to an interface (interface adaptation), then encrypts service information through a consensus algorithm (consensus management), then transmits the new service request with completeness and consistency to a shared ledger the after encryption (network communication), and records and stores such service request. The smart contract module is responsible for registration, issuance, trigger, and execution of a contract. A developer may define contract logic through a programming language, publish the contract logic onto the blockchain (contract registration), invoke a key or another event to trigger the execution according to logic of a contract term, and complete the contract logic. The smart contract module further provides functions of upgrading and cancelling a contract. The operation monitoring module is mainly responsible for deployment, configuration modification, contract configuration, and cloud adaptation during product release, as well as visual output of real-time status during product operation. The visual output concern, for example, alarms, monitoring network conditions, and monitoring health of a node device.

The platform-product service layer provides basic capabilities and implementation frameworks for typical applications. Based on the basic capabilities, the developers may superimpose features of services to implement a blockchain of the service logic. The application service layer provides an application service based on a blockchain solution, such that a participant of the service can use the service.

The trusted computing (TC) is technology promoted and developed by a trusted computing group (or trusted computing platform alliance, TCPA). The TC is a trusted computing platform which is based on a hardware security module and widely used in computing and communication systems, and can improve overall security of these systems. An endorsement key is an RSA public-private key pair having bits of a specific quantity (for example, 2,048 bits). The endorsement key is randomly generated when a computer device is delivered, and cannot be altered. The private key is saved in the computer device, and the public key can be used for verification and for encryption on sensitive data transmitted to the computer device.

The cross-domain refers to architecture that nodes are deployed in different clusters of a same blockchain network. Cross-domain access is required between theses nodes, and the cross-domain may be among clusters, regions, or the like.

The consortium blockchain is a blockchain only for members of a specific group and limited third parties. Multiple pre-selected nodes are designated as committers, which decide generation of each block altogether.

The endorsement mechanism refers to that certain nodes in a blockchain (such as the Hyperledger Fabric blockchain as the consortium blockchain) undertake an endorsement task, and nodes required to execute transactions can be defined in an endorsement policy. A novel concept in blockchain transactions is separation between executing smart contracts and updating a ledger. Thereby, a transaction throughput can be improved, privacy control with finer-granularity can be supported, and smart contracts which are more flexible and powerful can be implemented. A key factor of achieving these characteristics is explicit endorsement on transactions before adding these transactions into the ledger. In blockchains, endorsement can be understood as a process and a mechanism through which a node undertaking the endorsement task performs verification on information of a blockchain transaction and declares the validity of the transaction in a case that the transaction passes the verification. The node undertaking the endorsement task needs to prove the validity based on a valid signature of expected information on a valid certificate.

The endorsement policy may be understood as one or more conditions (e.g., which nodes need to participate) that need to be satisfied for endorsing a transaction, that is, conditions specified in the endorsement policy need to be satisfied in order to implement successful endorsement. A blockchain node stores a preassigned set of endorsement policies, and conditional judgment of endorsement is implemented in a chaincode. All transactions are subject to the endorsement policy because only endorsed transactions are considered to be valid and approved. Therefore, the endorsement policy may also be regarded as a condition which instructs a selected node to decide whether a transaction is valid.

Examples of endorsement policies may be as follows. All of nodes A, B, C, and F all need to participate in endorsing a transaction of type T, a majority of nodes in a channel need to participate in endorsing a transaction of type U, and at least three of nodes A, B, C, D, E, F, and G need to participate in endorsing a transaction of type V.

A method for data processing based on a blockchain network is provided according to embodiments of the present disclosure, in order to at least reduce time consumption of consensus in the blockchain network and improve transaction performances of the blockchain network.

Methods for data processing according to embodiments of the present disclosure are based on blockchain technology. In a feasible embodiment, theses methods may be further based on cloud technology. The cloud technology is a generic concept of network technology, information technology, integration technology, management platform technology, application technology, and the like under a mode of cloud computing services. The cloud technology can generate a pool of resources for on-demand usage, which is flexible and convenient. The methods according to embodiments of the present disclosure mainly relates to the cloud technology through cloud storage, a cloud database, and the like.

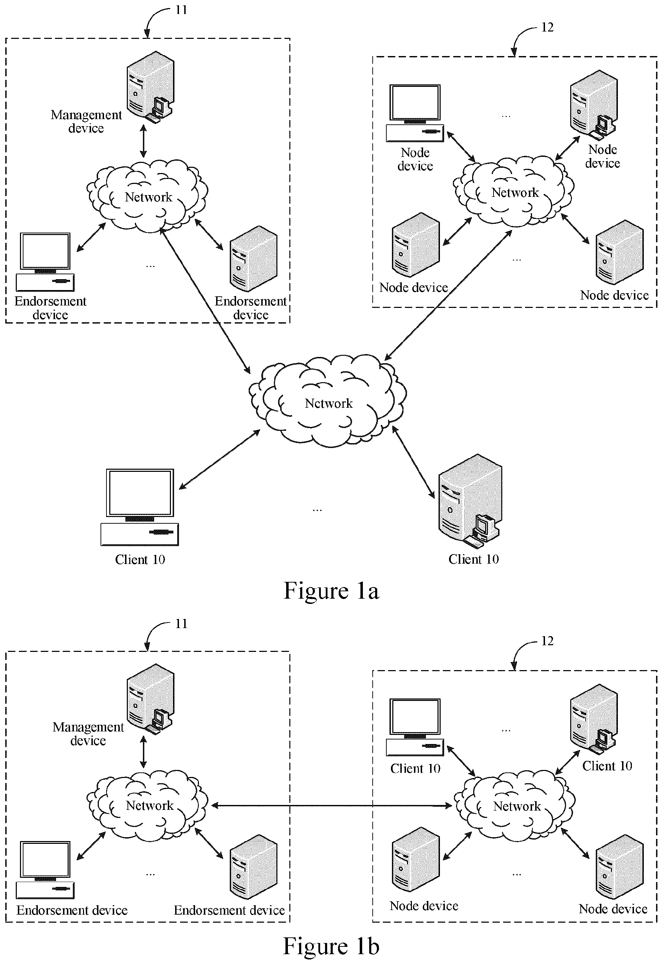

In an embodiment, a method for data processing is applicable to a data processing network. The data processing network is as shown in Figure la or Figure 1b, and comprises a client 10, a management network 11, and a blockchain network 12. The management network 11 comprises a management device and one or more endorsement devices. The blockchain network 12 comprises multiple node devices. In one embodiment, the client 10 may be located in neither the management network 11 nor the blockchain network 12, as shown in Figure 1a. In another embodiment, the client 10 may be located in the blockchain network 12, as shown in Figure 1b.

In one embodiment, the management network 11 and the blockchain network 12 may be two different networks, as shown in Figure 1a or Figure 1b. That is, the management network 11 exists independently from the blockchain network 12. In another embodiment, the management network may be located in the blockchain network. In such case, the management device and the endorsement devices in the management network may be node devices in the blockchain network, or may be ordinary computer devices other than the node devices in the blockchain network.

The management network 11 may be implemented based on cloud technology, for example, on a basis of the Tencent cloud or the Alibaba cloud. In a feasible embodiment, the endorsement device may be an encryptor, for example, a physical encryptor or a virtual encryptor. When the endorsement device is the virtual encryptor, the virtual encryptor should be hosted on a computer device. When the management network comprises a management device and only one endorsement device, the endorsement device may be a part of the management device. That is, the endorsement device is provided in the management device.

A device (at least one of the endorsement devices and the management device) in the management network 11 may be based on the trusted computing and escrow signature keys of at least a part of the node devices in the blockchain network. That is, the device may store the signature key of each node device in the blockchain network, or may store the signature keys of a part of the node devices in the blockchain network, where the part of the node devices are node devices which are indicated by an endorsement policy and may undertake an endorsement task. In one embodiment, the signature key may be a private key in a key pair of a node device. The key pair may be calculated through an RSA encryption algorithm, and comprises the private key and a public key. Usually, the private key is used for generating a signature, and the public key is used for verifying the signature. The endorsement device in the management network may replace the node device in the blockchain network for providing services such as data verification (including verifying a signature, verifying transaction data, and the like) and endorsement. The management device in the management network may replace the node device in the blockchain network to provide services such as block generation. The endorsement is a consensus process.

Herein the client, the management device, the endorsement device, and the node device each may be a server or a terminal. The server may be an independent physical server, may be a server cluster comprising multiple physical servers, may be a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The terminal may be, but is not limited to, a smartphone, a tablet computer, a notebook computer, a desktop computer, a smart speaker, a smartwatch and the like. The client, the management device, the endorsement device, and the node device may be directly or indirectly connected through wired or wireless communications, which is not limited herein.

According to embodiments of the present disclosure, the management network is provided in the data processing network. The endorsement device in the management network verifies data in the transaction request, and in a case that the data passed the verification, endorses the to-be-signed data, which is determined based on the transaction data, according to the endorsement policy to obtain the endorsement signature. Thereby, the data verification and the endorsement, i.e., the consensus, can be intensively and efficiently implemented in the management network. It is not necessary that the node devices in the blockchain network participate in the consensus. Therefore, time consumption of the consensus is effectively reduced, and transactions can be processed with higher efficiency, which improves transaction performances of the entire blockchain network.

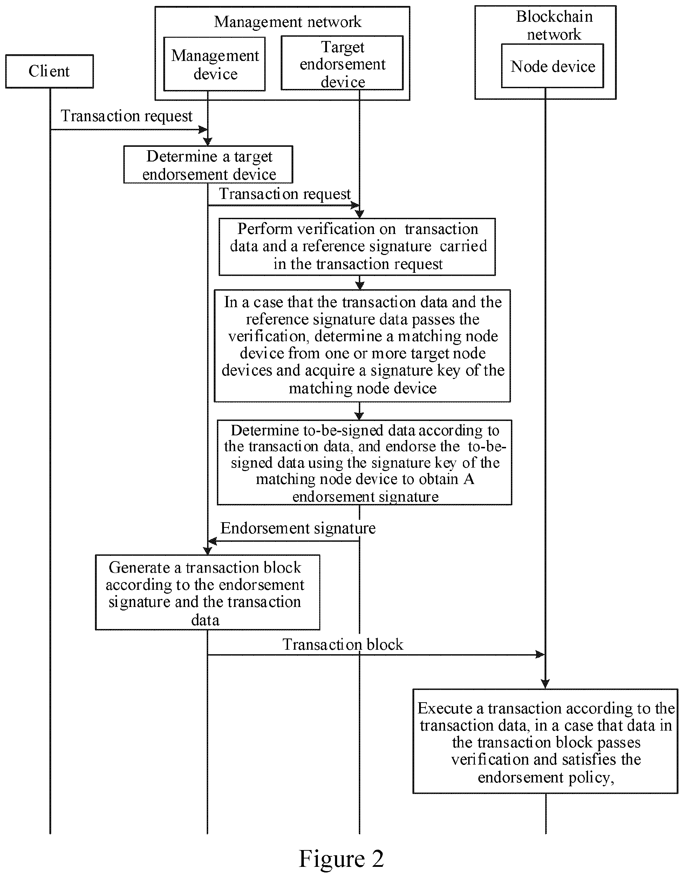

Reference is made to Figure 2, which is a schematic flowchart of a method for data processing based on a blockchain network provided according to an embodiment of the present disclosure. Herein the method for data processing based on a blockchain network is applicable to a data processing network as shown in Figure 1a or Figure 1b. The method comprises, but is not limited to, following steps S201 to S210.

In step S201, a client transmits a transaction request to a management device in a management network, where the transaction request carries transaction data and referential signature corresponding to the transaction data.

In one embodiment, the client signs the transaction data with a private key in a key pair of the client to obtain the referential signature. The key pair may be calculated through an RSA encryption algorithm, and comprises the private key and a public key. Generally, the private key is used for generating a signature, and the public key is used for verifying the signature.

In step S202, the management device acquires the transaction request transmitted by the client, and determines a target endorsement device from one or more endorsement devices comprised in the management network.

Signature keys of the node devices may be stored in different manners, and accordingly the target endorsement device(s) may be determined in following manners.

### First Manner

Each endorsement device in the management network stores the signature keys of a corresponding part of the node devices in the blockchain network, and different endorsement devices store the signature keys of different parts of the node devices. The node devices corresponding to all the signature keys stored in the endorsement devices may be all or only a part of the node devices in the blockchain network. As indicated by an endorsement policy, such part of the node devices is node devices that may undertake an endorsement task.

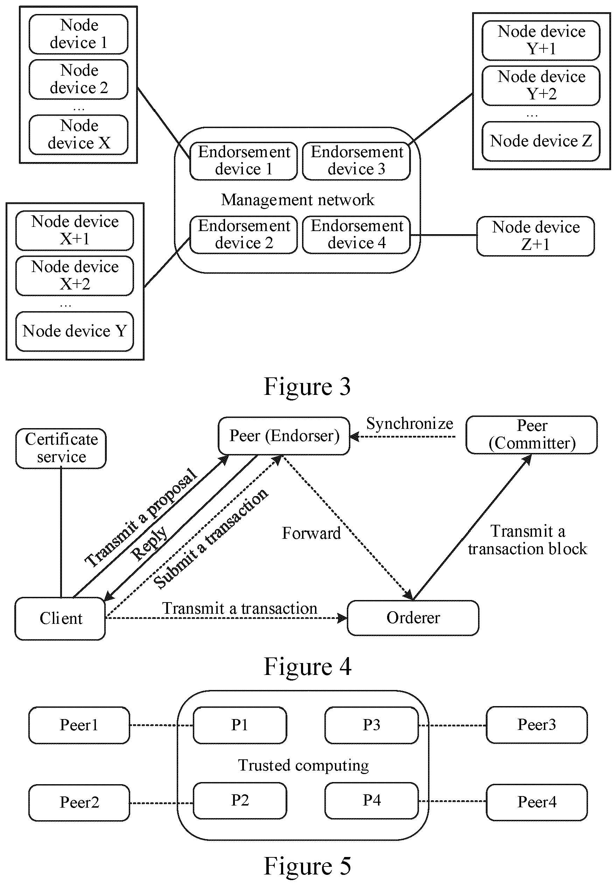

As shown in Figure 3, each endorsement device in the management network stores the signature keys of one or more node devices in the blockchain network. For example, endorsement device 1 stores the signature keys of X node devices, i.e., node devices 1 to X in the blockchain network, and endorsement device 4 stores the signature key of node device Z+1 in the blockchain network.

In a feasible embodiment, multiple node devices in the blockchain network may be deployed in different clusters. For example, as shown in Figure 3, node devices 1 to X are deployed in one cluster, node devices X+1 to Y are deployed in another cluster, and node devices Y+1 to Z are deployed in yet another cluster. Each endorsement devices in the management network stores the signature keys of one or more node devices which belong to a same cluster in the blockchain network.

After receiving the transaction request transmitted by the client, the management device may determine a target node device from the multiple node devices, which are comprised in the blockchain network, according to indication of the endorsement policy. There may be one or more target node devices. The determined target node device(s) are the node device(s) that are indicated by the endorsement policy and undertake endorsement on a current transaction. For example, the client initiates a transaction of type T, and node devices A, B, C, and F in the blockchain network are required to endorse transactions of type T according to a preset endorsement policy. In such case, the node devices A, B, C, and F in the blockchain network are determined as the target node devices.

Further, the management device determines an endorsement device, which stores the signature key(s) of the target node device(s), from the one or more endorsement devices comprised in the management network according to the determined target node device and how the signature keys of the node devices are stored among the endorsement devices. The management device determines such endorsement device as the target endorsement device. There may be one or more target endorsement devices, and the signature key(s) stored in the target endorsement device(s) comprise the signature key(s) of all target node device(s). When the management device forwards the transaction request from the client to one target endorsement device, the management device may transmit information (for example, numbering) of the target node device(s) as well. For example, the management device may transmit information of the corresponding target node device(s) whose signature key(s) are stored in such target endorsement device.

### Second Manner

Each endorsement device in the management network stores the signature keys of all node devices in the blockchain network, or each endorsement device in the management network stores the signature keys of the same part of the node devices in the blockchain network. As indicated by an endorsement policy, such part of the node devices is node devices that may undertake an endorsement task.

After receiving the transaction request transmitted by the client, the management device acquires a current status parameter of each endorsement device in the management network. The status parameter may indicate a network condition, a load condition, and/or the like. The target endorsement device which is to respond the transaction request is determined from the one or more endorsement devices according to the current status parameter of each endorsement device. For example, an endorsement device currently subject to a satisfying network condition and a low load may be determined as the target endorsement device. There may be one or more target endorsement devices.

In one embodiment, an order of selection among the endorsement devices may be predetermined, and the one or more target endorsement devices for current endorsement are selected from the one or more endorsement devices according to such order. For example, the predetermined order of selection among the endorsement devices is "endorsement device 1" →"endorsement devices 2 and 3" →"endorsement devices 4 and 5". Endorsement devices 2 and 3 would be selected for providing current endorsement in a case that endorsement device 1 provided the previous endorsement.

In one embodiment, when there are multiple target endorsement devices, the management device may set the corresponding endorsement task undertaken by each endorsement device. For example, according to the endorsement policy, target node devices 1 to 10 are required to undertake endorsement for the current transaction. In a case that endorsement devices 2 and 3 are selected for providing current endorsement, endorsement device 2 may be determined to undertake endorsement corresponding to target node devices 1 to 3, and endorsement device 3 may be determined to undertake endorsement corresponding to target node devices 4 to 10. When the management device forwards the transaction request from the client to a target endorsement device, the management device may transmit information indicating endorsement corresponding to such target endorsement device as well. The information indicates an endorsement task corresponding to the target endorsement devices for which such target endorsement device is responsible.

In one embodiment, the transaction request further carries a device identifier of the client. After receiving the transaction request transmitted by the client, the management device first determines whether the client has a permission to initiate the transaction request. For example, the management device checks whether the device identifier is in a predetermined white list, determines that the client has the permission to initiate the transaction request in case of a positive result, and determines that the client does not have the permission to initiate the transaction request in case of a negative result. In a case that the client has the permission to initiate the transaction request, the target endorsement device is determined from the one or more endorsement devices comprised in the management network. In a case that the client does not have the permission to initiate the transaction request, the transaction request of the client is directly rejected.

In step S203, the management device transmits the transaction request of the client to the target endorsement device.

In step S204, the target endorsement device acquires the transaction request of the client, and performs verification on the transaction data and the referential signature which are carried in the transaction request.

In one embodiment, the referential signature is obtained by signing the transaction data using the private key in the key pair of the client. In such case, the target endorsement device acquires the public key in the key pair of the client, and decrypts (de-signs) the referential signature using the public key to obtain signature verification data. The transaction data is determined to be not tampered in a case that the signature verification data matches the transaction data, and it is further checked whether the transaction data is executable. For example, it is checked whether a transaction corresponding to the transaction data is valid and/or whether a transaction corresponding to the transaction data has been executed, and the transaction data is determined to be executable in a case that the transaction is valid and/or has not been executed. In a case that the transaction data is executable, it can be determined that the transaction data and the referential signature in the transaction request passes the verification.

In one embodiment, the public key of the client may be carried in the transaction request, may be stored in each endorsement device, or may be stored in the management device. In a case that the public key of the client is stored in the management device, the target endorsement device may fetch the public key from the management device actively, or the management device may transmit the public key to the target endorsement device when forwarding the transaction request from the client to the target node device.

In step S205, in a case that the transaction data and the referential signature passes the verification, the target endorsement device determines a matching node device from the target node device(s), and acquires the signature key of the matching node device. The target node device(s) are determined from the multiple node devices comprised in the blockchain network according to the endorsement policy.

Herein the target endorsement device determines the target node device(s), to which endorsement task(s) to be undertaken by the target endorsement device correspond, when the transaction data and the referential signature passes the verification. That is, the target endorsement device determines the matching node device. There may be one or more matching node devices among the one or more target node devices which are required to undertake the endorsement for the current transaction as indicated by the endorsement policy.

In a case that the step S202 applies the forgoing first manner, the matching node device(s) are the target node device(s), of which the corresponding signature key(s) are stored in the target endorsement device, among the one or more target node devices. The target endorsement device may first determine one or more target node devices, which are required to undertake the endorsement for the current transaction, from the multiple node devices comprised in the blockchain network. Then, the target endorsement device determines the target node device(s), of which the signature key(s) are locally stored, from the one or more target node devices as the matching node device(s). In another embodiment, in a case the target endorsement device receives the information, which indicates the target node device(s) corresponding to the signature key(s) that are locally stored, from the management device, the target endorsement device determines the target node device(s), which are indicated by the information, directly as the matching node device(s).

In a case that the step S202 applies the forgoing second manner, the matching node device(s) are the target node device(s), for which the target endorsement device is responsible when undertaking the endorsement, among the one or more target node devices.

The signature key of the matching node device is acquired after the matching node device is determined. In one embodiment, the signature key may be a private key of a key pair of a node device. The key pair may be calculated through an RSA encryption algorithm, and comprises the private key and a public key. Generally, the private key is used for generating a signature, and the public key is used for verifying a signature.

In step S206, the target endorsement device determines to-be-signed data according to the transaction data, and endorses the to-be-signed data using the signature key of the matching node device to obtain an endorsement signature.

In one embodiment, the target endorsement device simulates executing a transaction according to the transaction data to obtain a simulated transaction result, and determines a vote on whether to approve the transaction request according to the simulated transaction result. For example, the vote indicating approval is generated when the simulated transaction result indicates that the transaction can be correctly executed. Further, the determined vote serves as the to-be-signed data, and the to-be-signed data is signed using the signature key(s) of all matching node device(s), respectively, to obtain the endorsement signature corresponding to each signature key.

In step S207, the target endorsement device transmits the endorsement signature to the management device.

In step S208, the management device receives the endorsement signature transmitted by the target endorsement device, and generates a transaction block according to the endorsement signature and the transaction data.

Herein the management device receives the one or more endorsement signatures transmitted by the target endorsement device, and afterwards generates the transaction block according to the received endorsement signatures and the transaction data.

In one embodiment, after receiving the endorsement signature(s) transmitted by the target endorsement device(s), the management device first verifies the endorsement signature(s) (i.e., signature verification), and generates the transaction block when each endorsement signature passes the verification. In a case that an endorsement signature does not pass the verification, the corresponding endorsement device (which may be the original endorsement device or may be a newly designated endorsement device) is instructed to perform the endorsement again. The method for verifying the endorsement signature may refer to following description.

In one embodiment, the management device may add the generated transaction block onto a blockchain stored in the management device for depositing. In another embodiment, the management device may generate, according to the transaction request of the client and the transaction block, a depositing block, and add the generated depositing block to a blockchain stored in the management device as a certificate.

In step S209, the management device broadcasts the transaction block to the node devices in the blockchain network.

In step S210, the node devices in the blockchain network executes a transaction according to the transaction data, in a case that data in the transaction block is determined to pass verification and satisfy the endorsement policy.

Herein, after receiving the transaction block broadcast by the management device, the node devices in the blockchain network extract the transaction data and each endorsement signature from the transaction block, and verify the transaction data and the endorsement signature. The verification on the transaction data comprises verifying correctness of a field and verifying validity of a transaction.

The method for verifying the endorsement signature may be follows. Each target node device required to undertake endorsement for a transaction corresponding to the transaction data is determined from the multiple node devices comprised in the blockchain network according to the endorsement policy. A signature verification key of each target node device is acquired. In one embodiment, each node device in the blockchain network stores the signature verification keys of all the node devices which may undertake endorsement as indicated by the endorsement policy. In such case, the signature verification key of each target node device can be directly acquired from local storage. In another embodiment, a cloud database stores the signature verification keys of all the node devices which may undertake endorsement as indicated by the endorsement policy, or stores the signature verification keys of all the node devices in the blockchain network. In such case, the signature verification key of each target node device need to be acquired from the cloud database. The signature verification key and the signature key constitute a key pair. The signature key may be a private key in the key pair, and the signature verification key may be a public key in the key pair. The key pair may be calculated through the RSA encryption algorithm. Moreover, each endorsement signature is decrypted (de-signed) by using the signature verification key of the corresponding target node device, and each endorsement signature is verified based on the signature verification data obtained through successful decryption.

It is determined that the endorsement policy is satisfied when: each endorsement signature can be successfully decrypted by the signature verification key of the corresponding target node device; the signature verification key of each target node device matches the signature key(s) for generating at least one of the endorsement signatures; and a result of the decryption indicates that all votes or a majority (e.g., more than 2/3) of the votes approves executing the transaction corresponding to the transaction data.

When the data in the transaction block passes the verification and the data in the transaction block is determined to satisfy the endorsement policy, the node devices in the blockchain network may execute the transaction according to the transaction data. After the transaction is executed, a transaction result may be recorded in a ledger (in other words, a block is generated based on the transaction result and uploaded onto the blockchain). In one embodiment, the node devices in the blockchain network may further add the received transaction block onto the blockchain stored in the node devices as a certificate.

When the target endorsement device obtains the endorsement signature, the target endorsement device may endorse the to-be-signed data (for example, a vote in response to the transaction request) and the transaction data using the signature key of the matching node device, so as to obtain the endorsement signature. The target endorsement device may transmit the to-be-signed data along with the endorsement signature to the management device. The management device may generate the transaction block according to the endorsement signature, the transaction data, and the to-be-signed data. Such data is added when generating the endorsement signature and the transaction block, so as to facilitate subsequent data verification. In addition, in a case that the management device in the management network escrows the signature key(s) of at least a part of the node devices in the blockchain network, the management device may transmit the signature key of the matching node device corresponding to the target endorsement device along with the transaction request to the target endorsement device, such that the target endorsement device can perform the corresponding endorsement.

Herein the management device and the endorsement device adopt the trusted computing. The endorsement device in the management network replaces the node devices in the blockchain network for providing services such as the data verification and the endorsement. That is, the endorsement device is configured to perform consensus. The management device in the management network replaces the node devices in the blockchain network for providing services such as the block generation. Thereby, the consensus on the transactions and the generation of the blocks can be intensively and efficiently implemented in the management network. It is not necessary that the node devices in the blockchain network participate in the transaction consensus and the block generation. Therefore, in comparison with convention manners in which most node devices must participate in the consensus, time consumption of the consensus is effectively reduced, and transactions can be processed with higher efficiency, which improves transaction performances of the entire blockchain network.

According to embodiments of the present disclosure, the method for data processing is a cross-domain solution of governing the blockchain nodes. At present, many service providers provide Platform as a Service (PaaS) for the blockchains or various solutions related to the blockchains. In most of these solutions, all nodes in the same blockchain network are deployed together, so as to improve transaction performances of the blockchain network greatly. Real decentralization requires future common deployment of blockchain nodes to be cross-domain or among different client environments. In such solution, the nodes communicate with each other via a public network, and the transaction performances of the entire network would face a huge challenge.

At present, there is no unitary solution for cross-domain governance on blockchain nodes. It some cases, a part of the blockchain nodes is determined to be consensus nodes, and these consensus nodes provide a consensus service and packed blocks. Such solution can only improve the transaction performance to a certain extent, and there is a bottleneck under high transaction concurrency, because signatures of nodes need to be collected for transactions. Moreover, the solution has low universality and cannot be used in most blockchain engines.

A process of a transaction has a great impact on the transaction performances of the blockchain. Generally, each transaction can only be executed by each node after being verified in the consensus. Many consensus algorithms are provided for public blockchains, such as PoW and PoS. In most cases, all nodes in the public blockchain are consensus nodes and are required to participate in the consensus, and hence the transaction performance is extremely inefficient. In other scenarios such as an enterprise, the consortium blockchains are more common. The consortium blockchain usually separate the consensus to improve the transaction performances to some extent. Herein the solution of the cross-domain governance on the blockchain nodes is mainly applied to the consortium blockchains.

Reference is made to Figure 4, which is a process of a transaction in the Fabric blockchain. The node labelled as "Orderer" is configured to provide a block-packing service. The node labelled as "Peer" is configured to execute a transaction and write in a ledger, and may be may be an endorsement node (Endorser) or a committing node (Committer). A certificate authority (CA) may provide a certificate service, which can generate a corresponding key for a client. The process of a transaction mainly comprises following steps:

The client transmits a transaction proposal (or transaction request) to the Endorser. After receiving the proposal, the Endorser verifies a signature of the proposal and checks whether a channel access control list (ACL) is satisfied, for example, checks whether the client is permitted to perform an operation in a current channel. In a case that the signature of the proposal passes the verification and the channel ACL is satisfied, the Endorser simulates the execution of a transaction and sign a result (which may be a vote generated according to a result of the simulation). The Endorser returns the signed result (result signature) to the client. The client receives the signed result returned by the Endorser, verifies the signed result, compares responses from multiple Endorsers, and checks whether enough signed results are collected. In a case that the client has collected enough result signatures and the responses from a majority of the Endorsers indicate an approval of executing the transaction, the client would transmit the transaction data to the Orderer. The transaction data may be transmitted the Orderer via the Endorser. The Orderer sorts pieces of data concerning the transaction to construct a transaction block, and transmits the transaction block to the Committer. The Committer verifies a structure of transaction and a signature in the transaction block, and checks whether the transaction satisfies an endorsement policy. In a case that the transaction structure and signature passes the verification and the transaction satisfies the endorsement policy, a valid transaction in the transaction block is executed, and a status of the ledger is updated. When processing the transaction block, the Committer may synchronize data concerning processing the transaction block to the Endorser.

In the foregoing process, the steps executed by the client may be specifically executed by an application program (APP) or a software development kit (SDK), which is configured in the client. Such process in the Fabric blockchain shows that there are multiple signature verification operations from the client transmitting the transaction proposal to the Peer executing the transaction, which consumes most time in each transaction. The endorsement is a consensus process. A transaction cannot be executed normally unless enough endorsement signatures are collected. In a case that the Endorsers are deployed in a distributed cross-domain manner, the nodes would communicate with each other via a public network. When collecting the endorsement signatures for each transaction, performances of the entire transaction are affected by stability, bandwidth, and the like of the public network.

Reference is made to Figure 5, which shows architecture of a solution of cross-domain governance on blockchain nodes according to an embodiment of the present disclosure. Herein a trustedcomputing region (which is equivalent to the aforementioned management network) is planned, and the private key (or the signature key) of each node in the blockchain network is escrowed in the TC region. Hence, consensus signing (that is, endorsement) on the transaction is implemented in the TC region, and blocks are packed (or produced) in the TC region and are distributed to each node in the blockchain network. After receiving the blocks, the nodes only need to verify the blocks and execute valid transactions in these blocks. The trusted computing ensures security of the private keys of the nodes and reliability of the data. In the TC region, node-level services (P1 to P4 as shown in Figure 5) are provided for escrowing private keys of the corresponding nodes, and a signing service is provided. As shown in Figure 5, P1 to P4 escrow the private keys of Peer1 to Peer4, respectively, and provide corresponding endorsement services. P1 to P4 as shown in Figure 5 are equivalent to the aforementioned endorsement devices, such as encryptors. Thereby, the endorsement on transactions can be implemented intensively in the TC region, which reduces dispensing of requests within the network and accelerating processing of transactions.

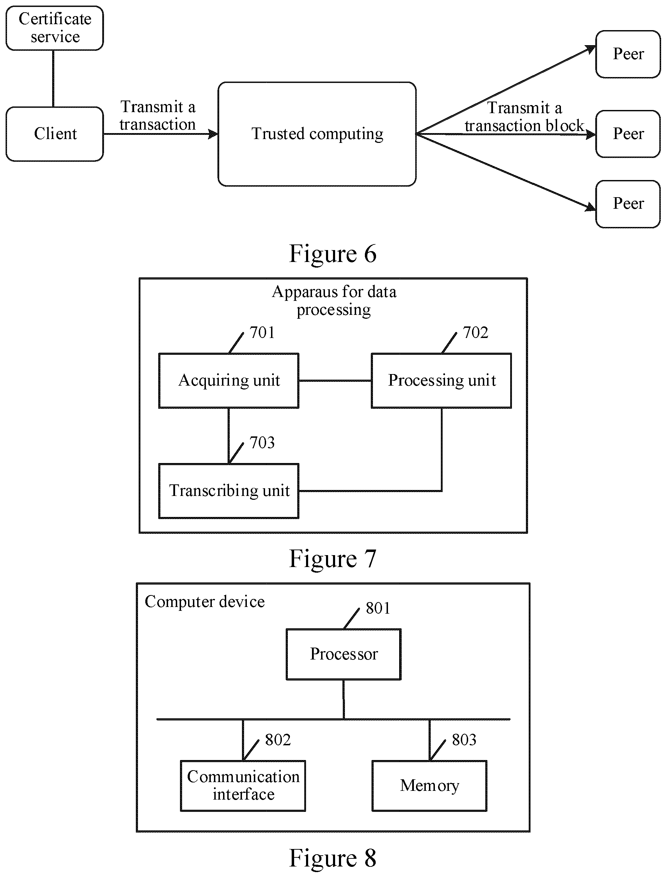

Reference is made to Figure 6, which is other architecture of a solution of cross-domain governance on blockchain nodes according to an embodiment of the present disclosure. A process of the cross-domain governance is as follows. First, the client transmits the transaction request to the TC region after registering a certificate through the CA (that is, obtaining a corresponding key). The TC region verifies the transaction signature carried in the transaction request after receiving the transaction request, then endorses the transaction using the escrowed private key(s) of the corresponding node(s) according to the endorsement policy in case of successful verification, then packs the transaction to generate the transaction block after collecting enough endorsement signatures, and dispenses the transaction block to the Peer. After receiving the transaction block, the Peer verifies a structure of the transaction and the signature, and checks whether the transaction satisfies the endorsement policy. In a case that the transaction structure and endorsement signature passes the verification and the transaction satisfies the endorsement policy, the Peer executes the valid transaction in the transaction block and the updates a status of the ledger. The specific implementation of each step in such process may refer to description in the foregoing embodiments. In addition, the above process only lists some main steps. The transaction process would be altered in some aspects for different blockchain engines, while the main concept is always performing consensus signing (i.e., endorsement) intensively. That is, the TC region escrows the private keys of the nodes to implement the consensus.

Herein the trusted computing is adopted. The signature key of each node in the blockchain network is escrowed in the TC region, and the TC region provides services of data validation, endorsement, and block generation. Each node in the blockchain network is only responsible for writing in a ledger. Such solution can improve efficiency of the endorsement (i.e., consensus) while ensuring security and reliability of information, thereby accelerating processing on the transactions and improving transaction performances of the entire network greatly. Furthermore, such solution has good universality and is applicable to nearly all blockchain engines.

Reference is made to Figure 7, which is a schematic structural diagram of an apparatus for data processing based on a blockchain network according to an embodiment of the present disclosure. The blockchain network is comprised in a data processing network and comprises multiple node devices. The data processing network further comprises a management network, and the management network comprises a management device and one or more endorsement devices. Architecture of the data processing network may refer to Figure 1a or Figure 1b. The apparatus comprises an acquiring unit 701, a processing unit 702, and a transcribing unit 703.

In one embodiment, the apparatus for data processing corresponds to the foregoing target endorsement device, and a function of each unit is as follows.

The acquiring unit 701 is configured to acquire a transaction request, where the transaction request carries transaction data and referential signature corresponding to the transaction data.

The processing unit 702 is configured to perform verification on the transaction data and the referential signature.

The processing unit 702 is further configured to determine a matching node device from one or more target node devices and acquire a signature key of the matching node device, in a case that the transaction data and the referential signature passes the verification, where the one or more target node devices are determined from the multiple node devices according to an endorsement policy.

The processing unit 702 is further configured to determine to-be-signed data according to the transaction data, and endorse the to-be-signed data using the signature key of the matching node device to obtain endorsement signature.

The transcribing unit 703 is configured to transmit the endorsement signature to the management device, so as to enable the management device to generate a transaction block according to the endorsement signature and the transaction data.

In one embodiment, each endorsement device stores one or more signature keys of at least a part of the node devices.

In one embodiment, each endorsement device in the management network stores one or more signature keys of a corresponding part of the node devices, and different endorsement devices store signature keys of different parts of the node devices, respectively. The acquiring unit 701 is configured to trigger the transcribing unit 703 to receive the transaction request which is from a client and forwarded by the management device. Upon receiving the transaction request transmitted by the client, the management device determines the one or more target node devices from the multiple node devices according to the endorsement policy, and transmits the transaction request to the target endorsement device that stores one or more signature keys of the one or more target node devices.

In one embodiment, each endorsement device in the management network stores the signature keys of all node devices. The acquiring unit 701 is configured to trigger the transcribing unit 703 to receive the transaction request which is from a client and forwarded by the management device. Upon receiving the transaction request transmitted by the client, the management device determines the target endorsement device, which is to respond the transaction request, from the one or more endorsement devices according to a current status parameter of each endorsement device, and transmits the transaction request to the target endorsement device.

In one embodiment, when determining the to-be-signed data according to the transaction data, the processing unit 702 is specifically configured to: simulate execution of a transaction according to the transaction data to obtain a simulated execution result; and determine, according to the simulated transaction result, a vote on whether to approve the transaction request, where the vote serves as the to-be-signed data.

In one embodiment the referential signature is obtained by signing the transaction data using a private key in a key pair. The acquiring unit 701 is further configured to acquire a public key in the key pair. The processing unit 702 is further configured to decrypt the referential signature using the public key to obtain signature verification data, check whether the transaction data is executable in response to the signature verification data matching the transaction data, and determine that the transaction data and the referential signature passes the verification in response to the transaction data being determined to be executable.

Herein functions of the functional units in the apparatus embodiments may be specifically implemented according to the processing corresponding to the target endorsement device in the foregoing method embodiments. Specific implementation may refer to relevant description in the foregoing method embodiments, and are not repeated herein.

In another embodiment, the apparatus for data processing corresponds to the foregoing management device, and a function of each unit is as follows.

The acquiring unit 701 is configured to acquire a transaction request, where the transaction request carries transaction data and referential signature corresponding to the transaction data.

The processing unit 702 is configured to determine a target endorsement device from the one or more endorsement devices.

The transcribing unit 703 is configured to transmit the transaction request to the target endorsement device, so as to enable the target endorsement device to obtain endorsement signature according to the transaction data and the referential signature.

The transcribing unit 703 is further configured to receive the endorsement signature transmitted by the target endorsement device.

The processing unit 702 is further configured to generate a transaction block according to the endorsement signature and the transaction data.

In one embodiment, each endorsement device stores one or more signature keys of at least a part of the node devices.

In one embodiment, each endorsement device in the management network stores one or more signature keys of a corresponding part of the node devices, and different endorsement devices store signature keys of different parts of the node devices, respectively. The processing unit 702 is configured to determine one or more target node devices from the multiple node devices according to an endorsement policy, and determine an endorsement device, which stores the signature keys of at least one of the one or more target node devices, from the one or more endorsement devices as the target endorsement device.

In one embodiment, each endorsement device in the management network stores the signature keys of all node devices. The acquiring unit 701 is further configured to acquire a current status parameter of each endorsement device in the management network. The processing unit 702 is configured to determine an endorsement device, which is to respond the transaction request, from the one or more endorsement devices in the management network according to the current status parameter of each endorsement device, as the target endorsement device.

In one embodiment, the processing unit 702 is further configured to trigger the transcribing unit 703 to broadcast the transaction block to the node devices in the blockchain network, so as to enable the node devices to execute a transaction according to the transaction data in response to data in the transaction block passing verification and being determined to satisfy the endorsement policy.

Herein functions of the functional units in the apparatus embodiments may be specifically implemented according to the processing corresponding to the management device in the foregoing method embodiments. Specific implementation may refer to relevant description in the foregoing method embodiments, and are not repeated herein.

According to embodiments of the present disclosure, the management network is provided in the data processing network. The endorsement device in the management network verifies data in the transaction request, and in a case that the data passed the verification, endorses the to-be-signed data, which is determined based on the transaction data, according to the endorsement policy to obtain the endorsement signature. Thereby, the data verification and the endorsement, i.e., the consensus, can be intensively and efficiently implemented in the management network. It is not necessary that the node devices in the blockchain network participate in the consensus. Therefore, time consumption of the consensus is effectively reduced, and transactions can be processed with higher efficiency, which improves transaction performances of the entire blockchain network.

Reference is made to Figure 8, which is a schematic structural diagram of a computer device according to an embodiment of the present disclosure. The computer device comprises a processor 801, a communication interface 802, and a memory 803. The processor 801, the communication interface 802, and the memory 803 may be connected via a bus or in another manner. Herein connection via the bus is taken as an example.

The processor 801 (or called a central processing unit, CPU) is a core of calculation and control in the computer device, and can parse various instructions and various data in the computer device. As an example, the CPU may be configured to parse an on/off instruction sent by the user to the computer device, and control the computer device to be switched on/off. As another example, the CPU may transmit interaction data or the like among internal structures of the computer device. Optionally, the communication interface 802 may include a standard wired interface or a standard wireless interface (such as a Wi-Fi or mobile communications interface), and is controlled by the processor 801 to transmit and/or receive data. The memory 803 is a storage apparatus of the computer device, and is configured to store a program and data. The memory 803 herein may include an internal storage memory of the computer device or an extended memory supported by the computer device. The memory 803 provides a storage space which stores an operating system of the computer device. The operating system may include, but is not limited to: an Android system, an iOS system, a Windows Phone system, or the like.

Herein the computer device corresponds to the foregoing target endorsement device or the forgoing management device, and is implemented based on a blockchain network. The blockchain network is comprised in a data processing network. The blockchain network comprises multiple node devices. The data processing network further comprises a management network, and the management network comprises the management device and one or more endorsement devices. Architecture of the data processing network may refer to Figure 1a or Figure 1b.

In one embodiment, the computer device described herein corresponds to the foregoing target endorsement device. In such case, the processor 801 executes operations on a side of the target endorsement device as described in the above method embodiments, through executing executable program codes in the memory 803.

In specific embodiments, the processor 801, the communication interface 802, and the memory 803 described herein may execute the part of the target endorsement device in the method embodiments of the present disclosure, and may execute the part of the target endorsement device in the apparatus embodiments of the present disclosure. Detailed descriptions are not repeated herein.

In one embodiment, the computer device described herein corresponds to the foregoing management device. In such case, the processor 801 executes operations on a side of the management device as described in the above method embodiments, through executing executable program codes in the memory 803.

In specific embodiments, the processor 801, the communication interface 802, and the memory 803 described herein may execute the part of the management device in the method embodiments of the present disclosure, and may execute the part of the management device in the apparatus embodiments of the present disclosure. Detailed descriptions are not repeated herein.

A computer-readable storage medium storing a computer program is further provided according to embodiments of the present disclosure. The computer program when executed by a computer configures the computer to perform the method according to embodiments of the present disclosure. Specific implementation may refer to the foregoing descriptions, and are not repeated herein.

A computer program product or a computer program is further provided according to embodiments of the present disclosure. The computer program product or the computer program comprises computer instructions, and the computer instructions are stored in a computer-readable storage medium. A processor of a computer device reads the computer instructions from the computer-readable storage medium and executes the computer instructions to configure the computer device to perform the method according to embodiments of the present disclosure. Specific implementation may refer to the foregoing descriptions, and are not repeated herein.

The foregoing method embodiments are illustrated as a series of actions or action combinations. Those skilled in the art could appreciate that the present disclosure is not limited to a described sequence of the actions because some steps may be performed in another sequence or may be simultaneously performed according to embodiments of the present disclosure. In addition, the embodiments described in this specification are exemplary, and the actions and modules that are involved may not be necessary when implementing the present disclosure.

Those skilled in the art may appreciate that all or some of the steps of the methods in the foregoing embodiments may be implemented through a program instructing relevant hardware. The program may be stored in a computer-readable storage medium. The storage medium may include: a flash disk, a read-only memory (ROM), a random access memory (RAM), a magnetic disk, an optical disc, or the like.

The foregoing disclosure is merely a part of embodiments of the present disclosure, and is not intended for limiting the protection scope of the present disclosure. Therefore, equivalent variations made in accordance with the claims of the present disclosure shall fall within the protection scope of the present disclosure.

## Claims

1. A method for data processing based on a blockchain network, wherein:
the blockchain network is comprised in a data processing network and comprises node devices, the data processing network further comprises a management network, the management network comprises a management device and one or more endorsement devices, and
the method is applicable to one of the endorsement devices in the management network, and comprises:
acquiring a transaction request, wherein the transaction request carries transaction data and a referential signature corresponding to the transaction data;
performing verification on the transaction data and the referential signature;
determining a matching node device from one or more target node devices and acquiring a signature key of the matching node device, in a case that the transaction data and the referential signature passes the verification, wherein the one or more target node devices are determined from the node devices according to an endorsement policy;
determining to-be-signed data according to the transaction data, and signing the to-be-signed data using the signature key to obtain an endorsement signature; and
transmitting the endorsement signature to the management device to enable the management device to generate a transaction block according to the endorsement signature and the transaction data.

2. The method according to claim 1, wherein each endorsement device stores one or more signature keys of at least a part of the node devices.

3. The method according to claim 2, wherein different endorsement devices store signature keys of different parts of the node devices, respectively, and acquiring the transaction request comprises:
receiving the transaction request which is from a client and forwarded by the management device,
wherein upon receiving the transaction request transmitted by the client, the management device determines the one or more target node devices from the node devices according to the endorsement policy and transmits the transaction request to the target endorsement device that stores one or more signature keys of the one or more target node devices.

4. The method according to claim 2, wherein each endorsement device in the management network stores the signature keys of all node devices, and acquiring the transaction request comprises:
receiving the transaction request which is from a client and forwarded by the management device,
wherein upon receiving the transaction request transmitted by the client, the management device determines the target endorsement device, which is to respond the transaction request, from the one or more endorsement devices according to a current status parameter of each endorsement device, and transmits the transaction request to the target endorsement device.

5. The method according to any one of claims 1 to 4, wherein determining the to-be-signed data according to the transaction data comprises:
simulating execution of a transaction according to the transaction data to obtain a simulated execution result; and
determining, according to the simulated transaction result, a vote on whether to approve the transaction request, wherein the vote serves as the to-be-signed data.

6. The method according to any one of claims 1 to 4, wherein the referential signature is obtained by signing the transaction data using a private key in a key pair, and performing the verification on the transaction data and the referential signature comprises:
acquiring a public key in the key pair;
decrypting the referential signature using the public key to obtain signature verification data;
checking whether the transaction data is executable in response to the signature verification data matching the transaction data; and
determining that the transaction data and the referential signature passes the verification in response to the transaction data being determined to be executable.

7. A method for data processing based on a blockchain network, wherein:
the blockchain network is comprised in a data processing network and comprises node devices, the data processing network further comprises a management network, the management network comprises a management device and one or more endorsement devices, and
the method is applicable to the management device in the management network, and comprises:
acquiring a transaction request, wherein the transaction request carries transaction data and a referential signature corresponding to the transaction data;
determining a target endorsement device from the one or more endorsement devices;
transmitting the transaction request to the target endorsement device to enable the target endorsement device to obtain endorsement signature according to the transaction data and the referential signature;
receiving the endorsement signature transmitted by the target endorsement device; and
generating a transaction block according to the endorsement signature and the transaction data.

8. The method according to claim 7, wherein each endorsement device stores one or more signature keys of at least a part of the node devices.

9. The method according to claim 8, wherein different endorsement devices store signature keys of different parts of the node devices, respectively, and determining the target endorsement device from the one or more endorsement devices comprises:
determining one or more target node devices from the node devices according to an endorsement policy, and
determining an endorsement device, which stores the signature key of at least one of the one or more target node devices, from the one or more endorsement devices as the target endorsement device.

10. The method according to claim 8, wherein each endorsement device in the management network stores the signature keys of all node devices, and the determining the target endorsement device from the one or more endorsement devices comprises:
acquiring a current status parameter of each endorsement device in the management network; and
determining an endorsement device, which is to respond the transaction request, from the one or more endorsement devices in the management network according to the current status parameter of each endorsement device, as the target endorsement device.

11. The method according to any one of claims 7 to 10, further comprising:
broadcasting the transaction block to the node devices in the blockchain network to enable the node devices to:
execute a transaction according to the transaction data in response to data in the transaction block passing verification and being determined to satisfy the endorsement policy.

12. An apparatus for data processing based on a blockchain network, wherein:
the blockchain network is comprised in a data processing network and comprises node devices, the data processing network further comprises a management network, and the management network comprises a management device and one or more endorsement devices; and
the apparatus is disposed in one of the endorsement devices, and comprises:
an acquiring unit, configured to acquire a transaction request, wherein the transaction request carries transaction data and a referential signature corresponding to the transaction data;
a processing unit, configured to:
perform verification on the transaction data and the referential signature,
determine a matching node device from one or more target node devices and acquire a signature key of the matching node device, in a case that the transaction data and the referential signature passes the verification, wherein the one or more target node devices are determined from the node devices according to an endorsement policy, and
determine to-be-signed data according to the transaction data and sign the to-be-signed data using the signature key to obtain an endorsement signature; and
a transcribing unit, configured to transmit the endorsement signature to the management device to enable the management device to generate a transaction block according to the endorsement signature and the transaction data.

13. An apparatus for data processing based on a blockchain network, wherein:
the blockchain network is comprised in a data processing network and comprises node devices, the data processing network further comprises a management network, and the management network comprises a management device and one or more endorsement devices; and
the apparatus is disposed in the management device, and comprises:
an acquiring unit, configured to receive a transaction request, wherein the transaction request carries transaction data and a referential signature corresponding to the transaction data;
a processing unit, configured to determine a target endorsement device from the one or more endorsement devices; and
a transcribing unit, configured to transmit the transaction request to the target endorsement device to enable the target endorsement device to obtain endorsement signature according to the transaction data and the referential signature, and receive the endorsement signature transmitted by the target endorsement device;
wherein the processing unit is further configured to generate a transaction block according to the endorsement signature and the transaction data.

14. A computer device, comprising a processor, a communication interface, and a memory which are connected to each other, wherein:
the memory stores an executable program code, and the processor is configured to invoke the executable program code to perform the method according to any one of claims 1 to 6, or the method according to any one of claims 7 to 11.

15. A computer-readable storage medium, storing a computer program, wherein:
the computer program when executed by a computer configures the computer to perform the method according to any one of claims 1 to 6, or the method according to any one of claims 7 to 11.

16. A computer program product, comprising computer instructions, wherein:
the computer instructions when executed by a computer configures the computer to perform the method according to any one of claims 1 to 6, or the method according to any one of claims 7 to 11.
